# EUROPÄISCHE PATENTANMELDUNG

(11) **EP 1 860 829 A1**
(43) Veröffentlichungstag der Anmeldung: **28.11.2007**
(21) Anmeldenummer: 06405210.3
(22) Anmeldetag: 15.05.2006
(51) Int. Cl.: H04L 12/433

(54) **Umgehungsmechanismus eines Verbinders in einem Verkehrsmittelnetzwerk**

(71) Anmelder: Ruf Telematik AG, 8952 Schlieren (CH)
(72) Erfinder: Engler, Fred, 8953 Dietikon (CH); Kern, Thomas, 8006 Zürich (CH); Zirn, Christoph, 8500 Frauenfeld (CH)
(74) Vertreter: Liebetanz, Michael

(57) **Zusammenfassung**

Es wird eine Datenübertragungseinheit für ein Datenkommunikationsnetzwerk offenbart, wobei das Netzwerk insbesondere für ein Fahrgastinformationssystem in einem Schienenfahrzeug oder an einem Haltepunkt ausgestaltet ist. Die Datenübertragungseinheit (410) umfasst einen ersten und einen zweiten Netzwerkanschluss für jeweils eine Datenübertragungsleitung sowie Mittel zur Übertragung von Daten zwischen den Netzwerkanschlüssen und einer Rechnereinheit (411). Ein Schaltelement (407) in der Datenübertragungseinheit (410) ist derart konfiguriert, dass es eine direkte Datenübertragung zwischen dem ersten und dem zweiten Netzwerkanschluss ermöglicht, wenn ein vorbestimmter Fehlerzustand eintritt, z.B. weil die Rechnereinheit nicht betriebsbereit ist. Ebenfalls offenbart ist ein hierauf basierendes Netzwerkgerät sowie ein daraus aufgebautes Datenkommunikationsnetzwerk.

## Beschreibung

### Technisches Gebiet

Die vorliegende Erfindung betrifft eine Datenübertragungseinheit, ein damit ausgestattetes Netzwerkgerät, ein hierauf basierendes Netzwerk, sowie deren Verwendung. Die Erfindung kann insbesondere für ein Fahrgastinformationssystem in einem Verkehrsmittel, insbesondere einem bodengebundenen Verkehrsmittel wie einem Reifenfahrzeug oder einem Schienenfahrzeug, oder für ein Kundeninformationssystem, z.B. an einem Haltepunkt, angewendet werden.

### Stand der Technik

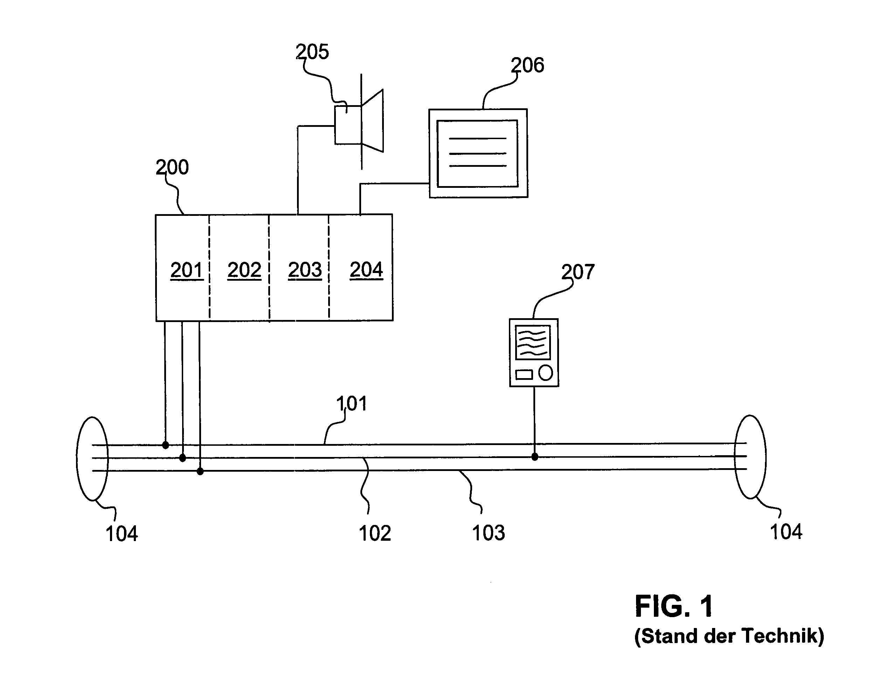

Ein bekanntes Fahrgastinformationssystem (PIS, Passenger Information System) für Schienenfahrzeuge ist in der Fig. 1 dargestellt. Das System umfasst in jedem Wagen einen Zentralrechner 200, an dem verschiedene Komponenten, beispielsweise über eine Soundkarte 203 ein Lautsprechersystem 205 und über eine Grafikkarte 204 ein Display 206 angeschlossen sind. Die Karten 203, 204 werden von einer zentralen Rechnereinheit 202, z.B. einem Industrie--PC-System, gesteuert. Zwischen den Wagen werden Daten mittels eines standardisierten Bussystems nach dem UIC-Standard übertragen (UIC = Union Internationale des Chemins de Fer, Internationaler Eisenbahnverband). Für ein Intercom-System mit Notsprechstellen ist ein eigener Intercom-Bus 102 vorhanden. Zudem erstreckt sich ein Zugbus 103 (z.B. WTB/MVB = Wire Train Bus/Multi Vehicle Bus oder CAN = Controller Area Network oder andere bekannte Standards) durch den Zug. Der Bus ist zwischen den Wagen über Kupplungselemente 104 verbunden. Zur Kommunikation mit dem UIC-Bus101, dem Intercom-Bus 102 und dem Zugbus 103 weist der Rechner eine Kommunikationseinheit 201 auf. Der Rechner empfängt Informationen von den vorgängig erwähnten drei Bussystemen, z.B. über den nächstfolgende Haltepunkt, und gibt diese über das Lautsprechersystem 205 und das Display 206 zur Information der Fahrgäste aus.

Bei einem solchen System werden Funktionen wie Audio- oder Displayausgabe zentral von einem Rechner aus gesteuert. Für jede Funktion werden spezielle Komponenten wie Soundkarten oder Grafikkarten und spezielle Leitungen benötigt, z.B. Audiokabel zur Weiterleitung der Audiosignale, spezielle Kabel zur Weiterleitung der Displaysignale usw.. Zudem ist für ein Notsprechsystem nochmals ein eigener Bus vorhanden. Diese Heterogenität führt zu einem grossen Verkabelungsaufwand. Es gibt keine einheitliche Kommunikation zwischen den Komponenten, so dass für kundenspezifische Anpassungen des Fahrgastinformationssystems ein hoher Engineeringaufwand nötig ist. Es ist zudem nicht auf einfache Weise möglich, nachträglich neue Komponenten in ein solches System zu integrieren, da hierfür jeweils komponentenabhängige Verkabelungen nötig sind. Des weiteren ist eine Funktionskontrolle in einem solchen System nicht ohne weiteres möglich: Wenn z.B. das Lautsprechersystem ausfällt, wird der Zentralrechner dies nicht feststellen, und der Defekt wird unter Umständen für eine längere Zeit unbemerkt bleiben.

### Darstellung der Erfindung

Der vorliegenden Erfindung liegt der Gedanke zugrunde, ein einheitliches Kommunikationssystem in einem Verkehrsmittel, z.B. einem Schienenfahrzeug, oder für einen Haltepunkt auf der Grundlage eines Datenkommunikationsnetzwerks zu schaffen. Das Datenkommunikationsnetzwerk soll eine möglichst einheitliche Kommunikation zwischen allen Komponenten des Systems sicherstellen und gleichzeitig eine hohe Betriebssicherheit aufweisen.

Aus diesem Grundgedanken heraus ergibt sich als eine Aufgabe der vorliegenden Erfindung, eine Einheit zur Verfügung zu stellen, die es ermöglicht, das Netzwerk so auszugestalten, dass es bei dem Ausfall einer beliebigen Komponente weiter funktionsfähig bleibt. Zur Lösung dieser Aufgabe schlägt die vorliegende Erfindung eine Datenübertragungseinheit nach Anspruch 1 vor, die sich besonders für den Einsatz in einem linearen oder ringförmigen Netzwerk eignet. Diese Einheit weist mindestens zwei Netzwerkanschlüsse und Mittel auf, um Daten zwischen den Netzwerkanschlüssen und einer mit der Datenübertragungseinheit zu verbindenden Rechnereinheit zu übertragen, z.B. entsprechende Leitungen oder Anschlüsse. Im normalen Betrieb wird die Datenübertragungseinheit Daten, die sie an einem der Netzwerkanschlüsse empfängt, von dort an die Rechnereinheit weiterleiten. Die Rechnereinheit wird anhand dieser Daten bestimmen, was mit diesen Daten geschieht, insbesondere, ob diese für sie selbst bestimmt sind oder für eine andere Rechnereinheit im Netzwerk. Gegebenenfalls wird dann die Rechnereinheit die Daten über die Datenübertragungseinheit an den anderen Netzwerkanschluss weiterleiten, so dass die Daten an die nächste Rechnereinheit im Netzwerk gelangen können. In diesem Falle wirkt also die Rechnereinheit im Verbund mit der Datenübertragungseinheit als Netzwerk-Switch oder als Router. Die Datenübertragungseinheit kann aber auch schon selbst als Netzwerk-Switch wirken, d.h., die Datenübertragungseinheit kann Mittel umfassen, um abhängig von Daten, die sie an einem ihrer Netzwerkanschlüsse empfängt, zu entscheiden, ob die Daten an den anderen Netzwerkanschluss und/oder an die Rechnereinheit weitergeleitet werden. Falls jedoch die Datenübertragungseinheit oder die Rechnereinheit ausfallen sollte, ist normalerweise eine Weiterleitung der Daten nicht mehr gewährleistet. Erfindungsgemäss wird daher vorgeschlagen, ein Schaltelement vorzusehen. Dieses ist so konfiguriert, dass es bei Vorliegen eines Fehlerzustands eine direkte Datenübertragung zwischen dem ersten und dem zweiten Netzwerkanschluss ermöglicht, insbesondere eine direkte Verbindung zwischen diesen Anschlüssen herstellt, unter Umgehung der Rechnereinheit. Der Fehlerzustand kann insbesondere darin liegen, dass eine Rechnereinheit ganz fehlt, dass eine an der Datenübertragungseinheit angeschlossene Rechnereinheit nicht betriebsbereit ist, oder dass die Datenkommunikationseinheit selbst nicht betriebsbereit ist.

Auf diese Weise wird sichergestellt, dass bei Vorliegen einer Funktionsstörung in der Rechnereinheit dennoch die Datenübertragung über die Datenübertragungseinheit hinweg funktioniert und das Netzwerk nicht unterbrochen oder gestört wird.

Bevorzugt sind die Netzwerkanschlüsse für den Anschluss an ein Ethernet-Netzwerk vorgesehen. Der Ethernet-Standard hat als Standard für LANs (Local Area Networks, lokale Netzwerke) weite Verbreitung gefunden und ist von der IEEE im Standard 802 normiert. Er ermöglicht insbesondere sehr hohe Übertragungsgeschwindigkeiten. So sind zum heutigen Zeitpunkt Raten von 100 MBit/s verbreitet. Diese Datenraten sind weitaus höher als diejenigen von üblichen Bussystemen im Schienenverkehr, wie dem Zugbusteil innerhalb der bekannten UIC-Leitungen zwischen einzelnen Wagen (vgl. hierzu auch die beiden UIC-Kodexe UIC 558 und 568).

In einer Ausgestaltung kann man sich die Datenkommunikationseinheit als eine Box vorstellen, die zum Netzwerk hin zwei Netzwerkanschlüsse für Netzwerkkabel aufweist und die zum Anschluss einer Rechnereinheit einen oder mehr Rechneranschlüsse aufweist. Im einfachsten Fall sind die Netzwerkanschlüsse einfach zu den Rechneranschlüssen durchgeschleift. In der Box befindet sich ein z.B. elektrisch, magnetisch oder mechanisch zu betätigendes Schaltelement, das eine Verbindung zwischen den beiden Netzwerkanschlüssen schliesst, wenn die Rechnereinheit nicht vorhanden oder nicht betriebsbereit ist oder wenn ein Fehler an der Datenübertragungseinheit selbst auftritt (z.B. fehlende Versorgungsspannung).

In der soeben beschriebenen Ausgestaltung ist die Datenkommunikationseinheit eine eigene, abgeschlossene Einheit, die von der Rechnereinheit trennbar ist. Stattdessen kann die Datenkommunikationseinheit aber auch unmittelbar zusammen mit der Rechnereinheit in ein vollständiges Netzwerkgerät integriert sein, insbesondere auch auf demselben Board ausgebildet sein.

Die Datenübertragungseinheit kann mit einer Rechnereinheit und gegebenenfalls weiteren Komponenten zu einem vollständigen Netzwerkgerät kombiniert werden, wobei die Datenübertragungseinheit wie schon erwähnt fest eingebaut oder vom restlichen Gerät trennbar sein kann. Ein derartiges Netzwerkgerät kann verschiedenste Funktionen übernehmen, wobei der grundsätzliche Aufbau jeweils sehr ähnlich ausgestaltet sein kann. So kann das Netzwerkgerät z.B. als eines der folgenden Geräte konfiguriert sein:
- als Steuergerät zur Steuerung eines Fahrgastinformationssystems;
- als Signaltransformationsgerät zur Datenkommunikation zwischen dem Datenkommunikationsnetzwerk und einem weiteren Netzwerk, insbesondere einem Netzwerk nach dem UIC- oder dem (schweizerischen) LBT-Standard;
- als Sprachkommunikationseinheit zur Eingabe und/oder Ausgabe von Sprachsignalen;
- als Tonausgabegerät zur Ausgabe von Audiosignalen;
- als Informationsanzeigegerät zur optischen Anzeige von über das Netzwerk übertragenen Informationen, insbesondere als Display für Reiseinformationen, Unterhaltungsinhalten oder als Reservationsanzeigegerät zur Anzeige von Sitzplatzreservationen (in diesem Fall kann bei dem PIS auch von einem "Infotainment"-System gesprochen werden, ein Kunstbegriff aus "Information" und "Entertainment");
- als Bildübertragungsgerät zum Senden und/oder Empfangen von Bilddaten (insbesondere für ein Videoüberwachungssystem zum Schutz gegen Vandalismus oder Belästigung von Passagieren) oder
- als Verteilergerät mit mindestens einem dritten Netzwerkanschluss und Mitteln zum Herstellen einer Verbindung zur Datenübertragung zwischen jeweils wenigstens zweien der Netzwerkanschlüssen, d.h., als Netzwerkswitch oder -hub.

Das Schaltelement kann auf verschiedene Weise so ausgebildet werden, dass eine Datenübertragung sichergestellt ist, wenn die Rechnereinheit einen Defekt hat, und zwar vorzugsweise selbst dann, wenn die Versorgungsspannung der Datenübertragungseinheit oder der Rechnereinheit ausfällt. So kann das Schaltelement z.B. durch eine Steuerspannung betätigbar sein, die das Schaltelement von der Rechnereinheit empfängt. Eine direkte Datenübertragung zwischen den Netzwerkanschlüssen wird vorzugsweise dann hergestellt, wenn die Steuerspannung unter einen bestimmten Schwellenwert sinkt. Alternativ ist es auch z.B. möglich, dass das Schaltelement ohne zusätzliche Steuerleitungen durch ein Magnetfeld betätigbar ist, das von der Rechnereinheit erzeugt wird. Es ist auch möglich, ein mechanisch betätigbares Schaltelement vorzusehen, das die Verbindung zwischen den Netzwerkanschlüssen herstellt, wenn die Rechnereinheit physikalisch von der Datenübertragungseinheit getrennt wird.

Das Schaltelement kann insbesondere ein elektromagnetisch betätigbares Schaltelement, z.B. ein Relais, sein. Vorzugsweise stellt dieses eine direkte Verbindung zwischen den Netzwerkanschlüssen her, sobald es stromlos wird. Stattdessen kann aber auch ein Halbleiterelement vorgesehen sein. Vorzugsweise ist dies ein Halbleiterelement, das im passiven Zustand leitet und im aktiven Zustand (d.h. bei Anliegen einer Steuerspannung oder bei Fliessen eines Steuerstroms) nicht leitet.

Das Vorliegen des Fehlerzustands kann in einem Netzwerk protokollabhängig z.B. dadurch festgestellt werden, dass die ausgefallene Rechnereinheit nicht mehr adressierbar ist. Die Datenübertragungseinheit kann jedoch auch so ausgestaltet sein, dass sie beim Auftreten des Fehlerzustands selbst ein Fehlersignal an das Netzwerk übermittelt.

Eine erfindungsgemässe Datenübertragungseinheit ermöglicht den Aufbau eines schnellen, robusten und redundanten Netzwerks, wie es weiter unten noch näher erläutert wird, bei dem eine universelle Kommunikation zwischen den einzelnen Komponenten im Netzwerk möglich ist. Damit eignet sich die Datenübertragungseinheit sowie ein darauf basierendes Netzwerkgerät besonders gut für einen Einsatz in einem (schienengebundenen) Verkehrsmittel und insbesondere für die Verwendung in einem Fahrgastinformationssystem. Jedoch ist es auch möglich, die Datenübertragungseinheit bzw. das Netzwerkgerät stationär z.B. für ein Kundeninformationssystem auf einem Bahnsteig einzusetzen.

Wenn aus den Datenübertragungseinheiten bzw. den Netzwerkgeräten ein Datenkommunikationsnetzwerk aufgebaut wird, sind verschiedene Topologien möglich. Der Aufbau der hier vorgeschlagenen Datenübertragungseinheiten prädestiniert ein lineares Aneinanderreihen der Datenübertragungseinheiten, d.h. eine Anordnung, bei der der erste Netzwerkanschluss der jeweils nachfolgenden Datenübertragungseinheit mit dem zweiten Netzwerkanschluss der jeweils vorhergehenden Datenübertragungseinheit verbunden ist. Eine solche Anordnung lässt sich leicht zu einem Ring schliessen. Ein Ring bietet den Vorteil, dass jedes Netzwerkgerät im Ring auf zwei Arten erreichbar ist. Sollte eine Unterbrechung eintreten, so kann der Übertragungsweg im Ring leicht geändert werden. Dazu umfasst das Netzwerk mindestens ein Netzwerkgerät, das als Steuereinheit zur Steuerung der Netztopologie konfiguriert ist. Im Idealfall ist jedes Gerät im Ring als derartige Steuereinheit konfiguriert (z.B. gemäss STP- , RSTP oder MRP-Protokoll). Diese ist dann vorzugsweise dazu ausgebildet, im Normalfall (d.h. wenn kein Fehlerzustand vorliegt) eine ausgewählte Netzwerkverbindung offen zu halten und diese bei Bedarf, d.h. bei Auftreten eines Fehlers im Netz, zu schliessen. Somit können Daten zwischen zwei beliebigen im Ring befindlichen Geräten immer ausgetauscht werden, ohne dass diese Daten über die Datenübertragungsleitung übermittelt werden, welche von der Kommunikationsstörung betroffen ist.

Es kann zudem vorgesehen sein, bei Bedarf eine oder mehrere Sehnen zu bilden, welche den Ring queren, d.h., es kann eine Datenübertragungsleitung vorgesehen sein, die mehrere Datenübertragungseinheiten im Ring überspringt (umgeht). Hierzu können im Ring wenigstens zwei als Verteilergeräte (bevorzugt Switches) konfigurierte Netzwerkgeräte vorhanden sein, die diese über die Sehne oder weiter entlang des Rings weiterleiten. Weitere Vermaschungsarten, insbesondere auch an einem gemeinsamen Punkt gekoppelte Ringe, sind denkbar.

Wenn ein derartiges Netzwerk in ein Verkehrsmittel mit trennbaren Einheiten, insbesondere ein Schienenfahrzeug mit mehreren Wagen, integriert ist, kann das Netzwerk die Schnittstellen zwischen den Einheiten über Leitungen eines Datenübertragungssystems mit einem vorgegebenen (gleichartigen oder andersartigen) Kommunikationsprotokoll überbrücken, z.B. über eine Ethernet-Leitung mit geeigneten Kupplungen oder über UIC-Signalisierungsleitungen gemäss den UIC-Kodexen 558 und/oder 568 und/oder dem Zugbusteil nach UIC 556. Dies ist insbesondere für streckentrennbare Kupplungen einfach realisierbar. Insbesondere bei nur depottrennbaren Kupplungen (Kurzkupplung), wie sie bei vielen modernen Triebwagenzügen vorhanden sind, ist es aber auch möglich, dass sich das Netzwerk direkt über die Schnittstellen zwischen den Einheiten hinweg erstreckt.

Weitere bevorzugte Ausgestaltungen sind aus den abhängigen Ansprüchen ersichtlich.

### Kurze Beschreibung der Zeichnungen

Bevorzugte Ausführungsformen der Erfindung werden im Folgenden anhand der Zeichnungen beschrieben, in denen zeigen:
- Fig. 1: eine Prinzipskizze eines Fahrgastinformationssystems des Standes der Technik;
- Fig. 2: eine Prinzipskizze eines Fahrgastinformationssystems gemäss der vorliegenden Erfindung;
- Fig. 3A: eine Prinzipskizze eines Fahrgastinformationssystems mit einer "Sehne" im ringförmigen Netzwerk;
- Fig. 3B: eine Prinzipskizze eines Fahrgastinformationssystems mit gekoppelten Ringen;
- Fig. 4: eine Prinzipskizze eines Fahrgastinformationssystems mit "Tentakeln";
- Fig. 5: eine Prinzipskizze eines Netzwerkgerätes des Standes der Technik;
- Fig. 6: eine Prinzipskizze eines Netzwerkgerätes gemäss einer ersten Ausführungsform;
- Fig. 7: eine Prinzipskizze eines Netzwerkgerätes gemäss einer zweiten Ausführungsform;
- Fig. 8: eine Prinzipskizze eines Netzwerkgerätes gemäss einer dritten Ausführungsform;
- Fig. 9: eine Illustration der Verbindung von Netzwerken über Wagen hinweg;
- Fig. 10A: eine Illustration einer ersten Kupplung;
- Fig. 10B: eine Illustration der zugehörigen Netzwerktopologie;
- Fig. 11A: eine Illustration einer zweiten Kupplung;
- Fig. 11 B: eine Illustration der zugehörigen Netzwerktopologie;
- Fig. 12A: eine Illustration einer dritten Kupplung;
- Fig. 12B: eine Illustration der zugehörigen Netzwerktopologie;
- Fig. 13A: eine Illustration einer vierten Kupplung;
- Fig. 13B: eine Illustration der zugehörigen Netzwerktopologie; sowie
- Fig. 14: eine Illustration eines Kundeninformationssystems an einem Haltepunkt.

### Ausführliche Beschreibung bevorzugter Ausführungsformen

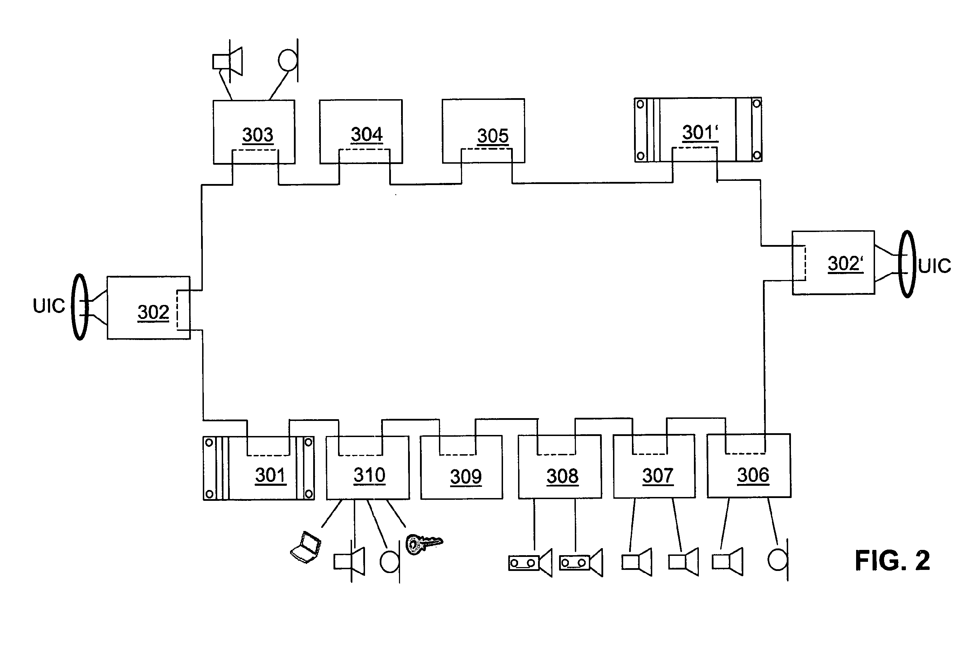

Ein Beispiel eines erfindungsgemässen Datenkommunikationsnetzwerks für ein Fahrgastinformationssystem (PIS) ist in der Fig. 2 dargestellt. In einer ringförmigen Topologie sind mehrere Netzwerkgeräte 301 - 310 miteinander seriell in einem Ethernet-Netzwerk verbunden: ein erster und zweiter Zentralrechner 301 bzw. 301', die als Steuergeräte für die anderen Netzwerkgeräte im PIS dienen; ein Interface 302 zum vorhergehenden Wagen sowie ein Interface 302' zum nachfolgenden Wagen, das jeweils dazu dient, eine Kommunikation mit einem UIC-Bus und gegebenenfalls einem weiteren Zugbus herzustellen; eine Sprechstelle 303 für ein (Notfall-) Intercomsystem; eine Zeilenanzeige 304 für Zugziel- und Haltepunktinformationen; eine Reservationsanzeige 305; ein Fahrzeugbegleiterpanel 306 mit Mikrofon und Lautsprecher für Durchsagen; ein Audio-Hub 307 für das Audiosystem des Wagens; ein Kamera-Hub 308 für den Anschluss von Überwachungskameras im Wagen; ein Bildschirm 309 für die Anzeige von detaillierten Reiseinformationen; sowie ein Fahrerpanel 310 mit vielfältigen Ein- und Ausgabemöglichkeiten sowie Steuerungsmöglichkeiten. Natürlich können stattdessen oder zusätzlich auch mehrere gleichartige oder andere Netzwerkgeräte mit anderen Funktionalitäten vorhanden sein, beispielsweise Bildschirme für die Darstellung von Werbeinformationen. Jedes der Netzwerkgeräte weist (mindestens) zwei Netzwerkanschlüsse auf, wobei der jeweils erste dieser Anschlüsse mit dem vorhergehenden und der zweite mit dem nachfolgenden Netzwerkgerät im Ring verbunden ist.

Das Netzwerk weist eine sehr hohe Betriebssicherheit auf. Insbesondere weist das Netzwerk mehrere Eigenschaften auf, die die Datenkommunikation im Netzwerk jederzeit sicherstellen, auch wenn Betriebsstörungen auftreten. So ist in jedem Netzwerkgerät eine nicht näher dargestellte Datenübertragungseinheit vorhanden, welche die Netzwerkanschlüsse des Netzwerkgeräts selbsttätig miteinander verbindet, falls das jeweilige Netzwerkgerät ausfällt. Beispiele für den Aufbau derartiger Datenübertragungseinheiten werden unten ausgeführt. Jedes Netzwerkgerät ist prinzipiell in jeder Richtung erreichbar. Im Normalzustand werden eine oder mehrere Verbindungen zur Unterbrechung des Ringes oder der Vermaschung offen gehalten. Welche Verbindung(en) geöffnet wird/werden, wird unter den dazu befähigten Geräten ausgehandelt bzw. nach einem vorbestimmten Verfahren ermittelt (z.B. nach dem Spanning Tree Protokoll STP). Sollte eine Verbindung im Netzwerk gestört oder unterbrochen sein, so kann ein Gerät eine, oder je nach Netztopologie auch mehrere, der vorher geöffneten Verbindungen schliessen. Auf diese Weise sind selbst bei einer Unterbrechung des Rings jederzeit alle Netzwerkgeräte erreichbar (Redundanz aufgrund der Topologie). Eine zusätzliche Redundanz ist dadurch sichergestellt, dass zwei Steuergeräte vorhanden sind, wobei jedes Steuergerät bei Ausfall des anderen Steuergeräts die gesamte Steuerung des Systems übernehmen kann.

Ein derart aufgebautes PIS weist mehrere Vorteile auf. Es basiert auf immer wieder einsetzbaren Grundkomponenten. So kann jedes der Netzwerkgeräte grundsätzlich gleich aufgebaut werden, da wichtige Funktionalitäten, vor allem die Netzwerkkommunikation, bei allen Netzwerkgeräten gleich sind. Dies ermöglicht es, die gleiche Hardware, Firmware und Software für unterschiedliche Arten von Netzwerkgeräten zu verwenden und nur für den jeweiligen Einsatzzweck anzupassen. Die Netzwerkgeräte sind zentral einsetzbar, d.h., sie können alle gemeinsam an einem Ort angeordnet sein, oder können dezentral über den Wagen verteilt sein. Mit anderen Worten ermöglicht die vorgeschlagene Netzwerk-Grundstruktur, insbesondere die vorgeschlagene Ringstruktur, eine sehr grosse Flexibilität bei der Anordnung der Komponenten. Die einheitliche Netzwerk-Grundstruktur ermöglicht es, auf einfache Weise weitere Anforderungen umzusetzen, die bei einem herkömmlichen PIS nur schwer realisierbar sind. So ist es möglich, eine Selbstdiagnose des Systems zu verwirklichen, die es ermöglicht, Fehler bis hinab zu einzelnen austauschbaren Komponenten zu erkennen und zu lokalisieren. Dies vereinfacht die Wartung erheblich. Das System ermöglicht des weiteren eine einheitliche Adressierung innerhalb jedes Wagens wie auch über die Kupplungen hinweg zwischen verschiedenen Wagen; hierzu unten mehr. Das System ermöglicht des weiteren aufgrund des einheitlichen Interfaces, eine "Plug-and-Play"-Lösung zu realisieren, d.h. ein System, bei dem die Steuereinheit(en) selbsttätig erkennt/erkennen, welche Komponenten sich im Netzwerk befinden, und die Steuerung entsprechend anpasst. Insbesondere ist es möglich, dass die Steuereinheit/en Geräteparameter automatisch ermittelt/ermitteln und so das Gerät korrekt einbindet/einbinden.

Für das Netzwerk findet vorzugsweise eine "industrialisierte" ("gehärtete") Variante des Ethemet-Standards Verwendung, wobei ein Switched-Ethernet-Standard für die Ringstruktur besonders geeignet ist. Die Adressierung im Netzwerk kann über Unicast-, Multicast -und/oder Broadcast-Standards erfolgen.

Die Adressierung kann anhand verschiedener Kriterien erfolgen. So trägt jedes Netzwerkgerät eine eigene, eindeutige, statische MAC-Adresse, üblicherweise eine 48-Bit-Adresse, die eine eindeutige Zuordnung zu einem Hersteller über eine von der IEEE vergebene OUI von 22 Bit sowie z.B. eine Identifikation von Geräte-Typ und Geräte-Nummer über weitere Adressbereiche ermöglicht. Diese MAC-Adresse wird primär für die Adressierung im Netzwerk verwendet.

Jedes Netzwerkgerät kann zudem eine eigene, statische oder dynamische IP-Adresse erhalten, z.B. nach Standard lP V4 (32 Bit) oder V6. Streams (Audio/Video) erfolgen dann z.B. über lP-Multicast mit vordefinierten Multicast-Gruppen. Auf diese Weise kann das Netzwerk auf einfache Weise segmentiert werden, so dass z.B. eine Übertragung zwischen den Wagen nur für dedizierte Multicasts erfolgt.

Des weiteren kann jedem Netzwerk eine Nummer nach UIC-Standard 438-1 zugewiesen werden, die es ermöglicht, eindeutig zu identifizieren, in welchem Wagen sich das Netzwerk befindet. Diese Nummern werden statisch bei der ersten Inverkehrsetzung jedes Wagens vergeben. Nach dieser Nummer orientiert sich z.B. das Servicepersonal des Zugbetreibers. Die Zuordnung der Nummer zum Netzwerk erfolgt für jedes Netzwerk vorteilhaft einmalig beim Einbau in den Wagen.

Auch kann jedem Netzwerkgerät eine Fahrzeugnummer nach UIC 556 zugeordnet werden. Diese Fahrzeugnummer wird bei Zusammenstellung des Zuges dynamisch zugeordnet. Nach dieser Nummer orientiert sich der Lokführer. Das PIS-Netzwerk kann diese Nummer z.B. von einem Fahrzeugbus lesen oder vergibt diese Nummer selbst. Im Zuge dieses Nummerierungsvorganges ergibt sich auch die Fahrtrichtung und abgeleitet davon die in Fahrtrichtung betrachtete Richtungsangaben "Links" und "Rechts".

Schliesslich kann noch jedem Netzwerk eine betreiberspezifische Wagennummer im Reservationssystem zugewiesen werden. Diese erlaubt es, zusammen mit einer Sitzplatznummer, einen Sitzplatz zu identifizieren und dort eine Reservationsanzeige anzusteuern. Nach dieser Nummer orientiert sich der Fahrgast.

Die Topologieauflösung im Netzwerk kann nach dem bekannten "Spanning Tree Protocol", insbesondere wie es in IEEE 802.1 D standardisiert ist, erfolgen.

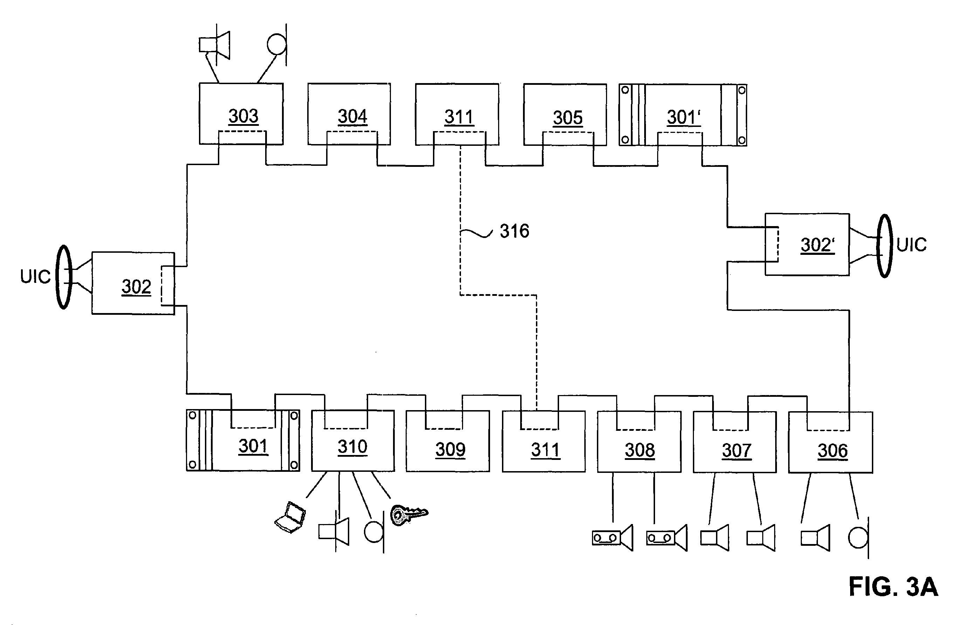

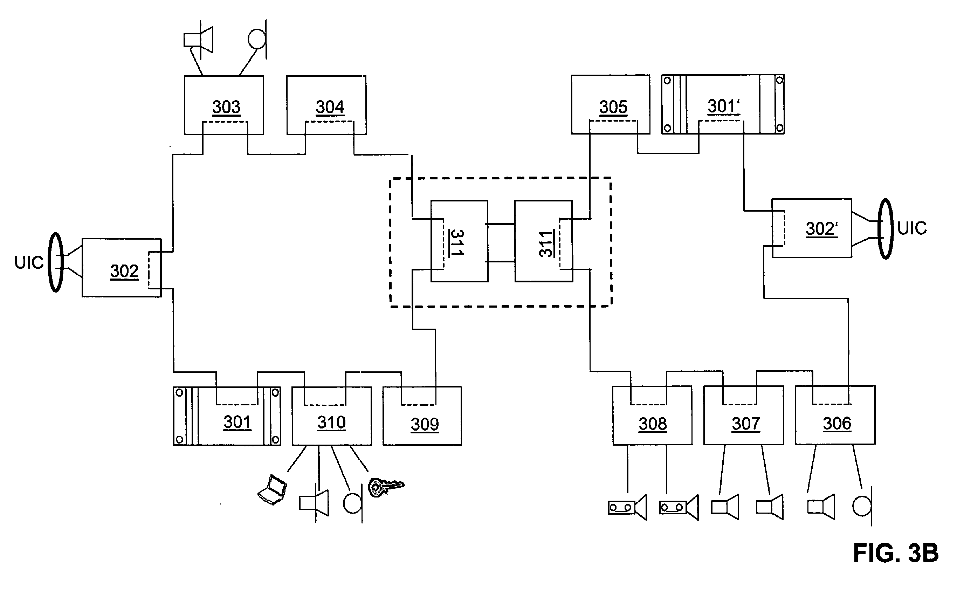

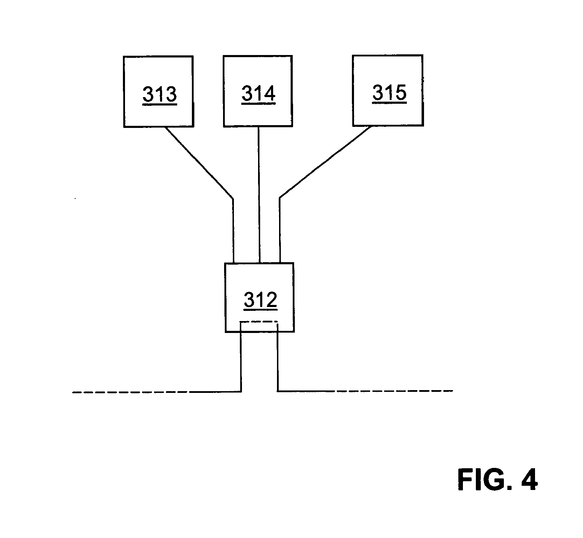

Das Datenkommunikationsnetzwerk ist zwar vorzugsweise in einer ringförmigen Grundstruktur aufgebaut. Jedoch ist es möglich, diese Struktur nach Bedarf zu modifizieren. Beispiele hierfür sind in den Figuren 3A, 3B und 4 dargestellt. In dem Beispiel der Fig. 3A ist der Ring durch eine Sehne 316 geschnitten. Die Sehne wird von einer Netzwerkleitung gebildet, die mit zwei Netzwerkswitches 311 im Ring verbunden ist. Die Switches versenden bei Bedarf Netzwerkpakete über die Sehne 316, z.B. abhängig von der Zieladresse der Pakete. Auf diese Weise wird die Übertragungskapazität erhöht, und es wird ein zusätzlicher Übertragungsweg geschaffen, falls das Netzwerk an anderer Stelle unterbrochen ist. Konzeptionell unterteilt die Sehne den Ring in zwei Teilringe.

Die Fig. 3B zeigt ein Beispiel, in dem zwei Teilringe an einem gemeinsamen Punkt gekoppelt sind. Je ein Netzwerkswitch 311 in jedem Teilring stellt die Kommunikation über den Kopplungspunkt hinweg sicher. Stattdessen kann auch ein einziger Netzwerkhub, -switch oder -router mit (mindestens) vier Ports vorgesehen ein, wie er gestrichelt angedeutet ist. Die so erzielbaren Vorteile sind ähnlich wie bei dem Vorsehen einer Sehne.

Die Fig. 4 illustriert ein Beispiel mit "Tentakeln", d.h. mit weiteren Netzwerkgeräten 313, 314, 315, die ausserhalb des Rings über einen im Ring befindlichen Switch oder Hub 312 sternförmig angeschlossen sind. Weitere Topologien, wie Bäume usw., sind entsprechend ebenfalls möglich.

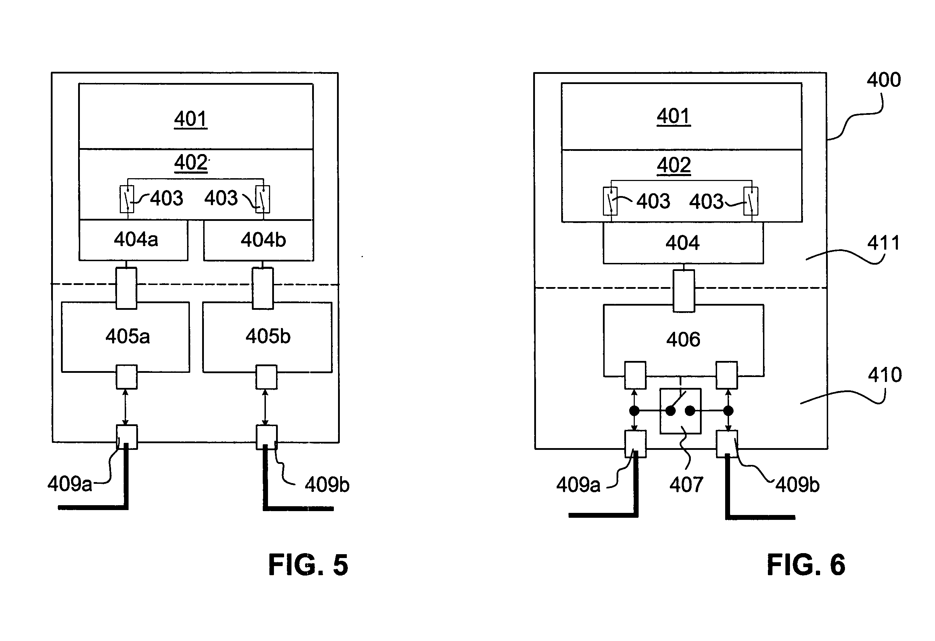

Anhand der Figuren 5 bis 8 soll im Folgenden anhand von Beispielen erläutert werden, wie die einzelnen Netzwerkgeräte aufgebaut sind. Die Fig. 5 zeigt schematisch eine PC-Karte, die nicht gemäss der vorliegenden Erfindung aufgebaut ist. Ein Rechner mit Betriebssystem 401 steuert einen Netzwerkcontroller 402, der bei Bedarf per Software eine Verbindung (über symbolisch angedeutete, in Software realisierte "Schalter" 403) zwischen zwei Netzwerkports 404a und 404b herstellt, um Daten weiterzuleiten. Die Einheiten 401, 402, 403, 404a und 404b bilden die eigentliche Rechnereinheit. Die Daten werden von Netzwerkkarten 405a und 405b gesendet bzw. empfangen. Sollte die Rechnereinheit oder eine der Netzwerkkarten ausfallen, so kann keine Verbindung in Hardware zwischen den Netzwerkanschlüssen 409a, 409b der Karten 405a und 405b hergestellt werden.

Die vorliegende Erfindung schlägt dagegen vor, in dem Netzwerkgerät 400 eine Datenübertragungseinheit 410 auszubilden, die ein Hardware-Schaltelement 407 umfasst, wie dies in den Figuren 6 bis 8 illustriert ist. Sollte das Netzwerkgerät ausfallen, so schliesst dieses Hardware- Schaltelement 407 selbsttätig eine Verbindung zwischen den Netzwerkanschlüssen und entkoppelt die Netzwerkanschlüsse vom Netzwerkgerät. Eine derartige Funktionalität lässt sich unabhängig davon realisieren, wie im konkreten Fall die Kommunikation zwischen dem Netzwerkgerät und dem Netzwerk implementiert ist, wie aus den unterschiedlichen, beispielhaften Implementierungen der Figuren 6 bis 8 ersichtlich wird.

In dem Beispiel der Fig. 6 kommuniziert der Netzwerkcontroller nur über einen einzigen Port mit einem Netzwerkswitch 406, der die Kommunikation zwischen dem Netzwerkgerät und dem Netzwerk über die beiden Netzwerkanschlüsse 409a, 409b abwickelt. Bei Ausfall des Netzwerkswitches 406 oder der Rechnereinheit 401 bis 404 schliesst das Hardware-Schaltelement 407 eine Verbindung zwischen den Netzwerkanschlüssen. Der Netzwerkswitch 406 und das Schaltelement 407 bilden dabei gemeinsam eine Datenübertragungseinheit 410. Die Steuerung des Schaltelements kann z.B. über eine Steuerspannung erfolgen, die vom Netzwerkswitch oder von der Rechnereinheit erzeugt wird. Sobald die Steuerspannung unter einen vorbestimmten Wert sinkt, schliesst das Schaltelement. Auf diese Weise ist eine Verbindung zwischen den Netzwerkanschlüssen selbst dann gewährleistet, wenn das Netzwerkgerät komplett ausfällt, z.B. weil die Stromversorgung des Netzwerkgerätes unterbrochen wird.

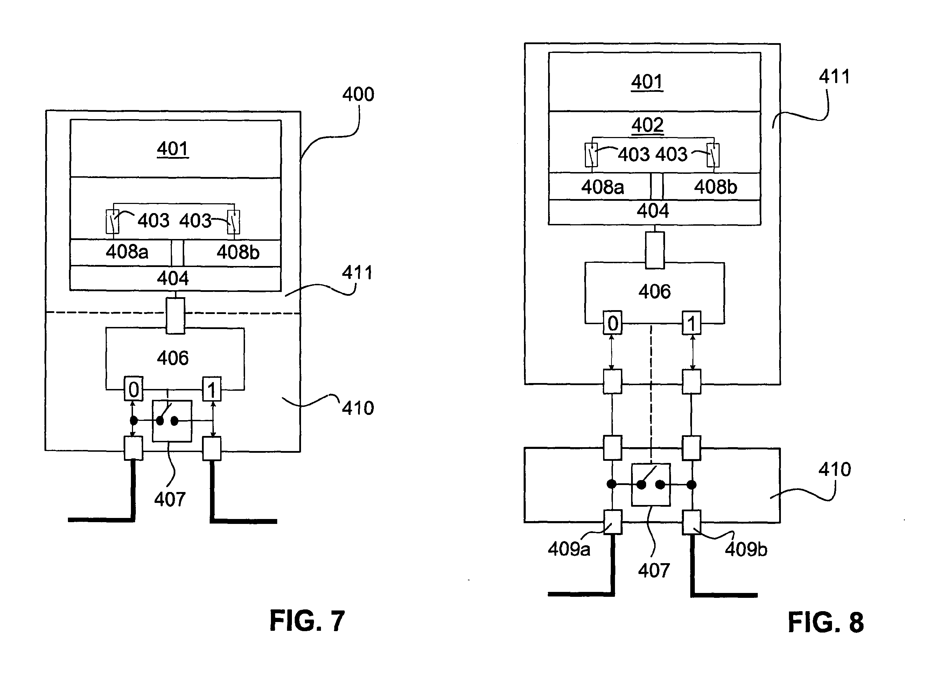

Die Fig. 7 zeigt ein Beispiel für eine andere mögliche Implementierung. Gemäss Fig. 7 kommuniziert der Netzwerkcontroller über virtuelle Netzwerkports 408a, 408b, während wiederum ein Switch 406 die eigentliche Netzwerkkommunikation abwickelt. Auch hier ist ein Schaltelement 407 vorhanden, das bei Ausfall des Switches oder anderer Hardware eine Verbindung zwischen den Netzwerkanschlüssen schliesst.

In diesen Beispielen ist die Datenübertagungseinheit 410, und insbesondere das Schaltelement 407 als deren Kern, zusammen mit der restlichen Hardware des Netzwerkgerätes auf einer einzigen Karte untergebracht. Die Fig. 8 illustriert, dass eine Datenübertragungseinheit 410 auch unabhängig von der restlichen Hardware ausgebildet werden kann. Im Beispiel der Fig. 8 umfasst die Datenübertragungseinheit 410 allein das Schaltelement 407 sowie entsprechende Interface-Stecker zum Anschluss der Netzwerkleitungen und der Rechnereinheit 411. Die Rechnereinheit 411 lässt sich hier ohne weiteres von der Datenübertragungseinheit 410 trennen, wobei wiederum das Schaltelement 407 schliesst. Auf diese Weise lässt sich die Rechnereinheit 411 entfernen, ohne dass das Netzwerk unterbrochen wird. In diesem Falle kann das Schaltelement 407 so ausgestaltet sein, dass Kontakte zwischen den Netzwerkanschlüssen auf mechanischem Wege geschlossen werden, wenn die Rechnereinheit entfernt wird.

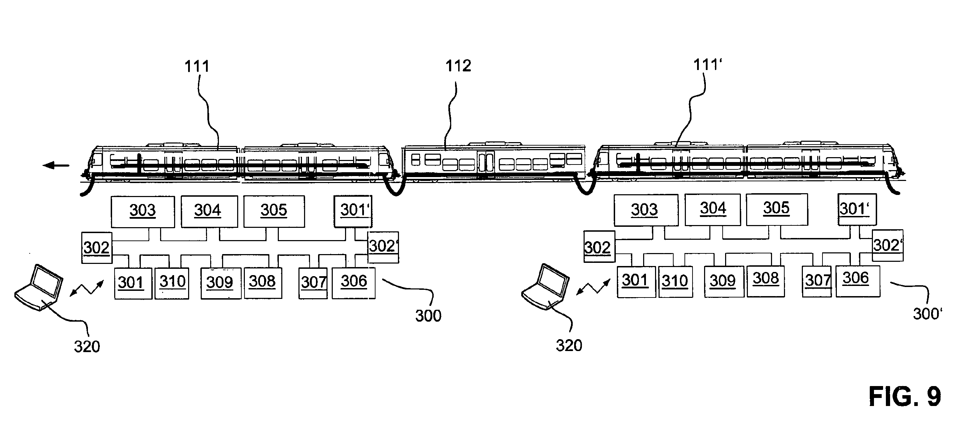

Die Figuren 9 bis 13B illustrieren, wie sich Teilnetzwerke, die jeweils in einem Wagen eines Zugs untergebracht sind, untereinander verbinden lassen. Die Fig. 9 illustriert die dabei auftretende Grundproblematik: In jeder der links bzw. rechts dargestellten Triebwageneinheiten 111 bzw. 111' ist ein PIS 300 mit einem Netzwerk gemäss der vorliegenden Erfindung implementiert. Jedes der Netzwerke lässt sich mit Hilfe eines Computers 320 parametrieren und warten. Zwischen den Triebwageneinheiten befindet sich ein traditioneller Wagen 112 ohne das erfindungsgemässe PIS, sondern stattdessen mit einem traditionellen PIS oder gar keinem PIS. Durch den Zug hindurch erstreckt sich ein UIC-Bus 101. Eine Problematik besteht nun darin, die getrennten Netzwerke in den Triebwageneinheiten 111, 111' sinnvoll miteinander zu verbinden, so dass eine optimale Funktionalität und Betriebssicherheit gewahrt bleibt. In den nachfolgenden Figuren soll erläutert werden, wie dies für verschiedene Arten von Kupplungen realisiert werden kann.

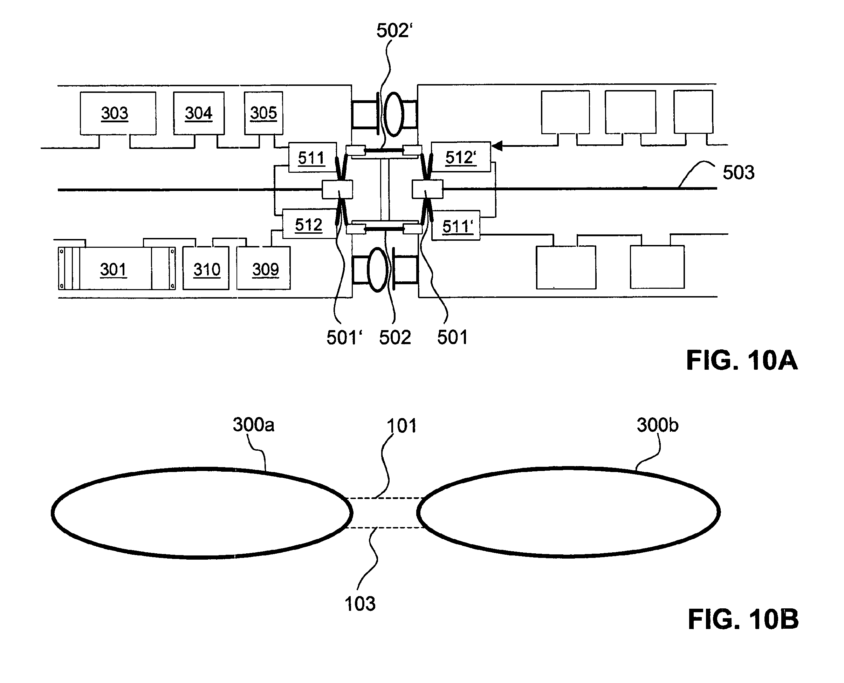

In der Fig. 10A ist schematisch illustriert, wie zwei erfindungsgemässe Netzwerke über eine manuelle streckentrennbare (gleisfeldtrennbare) Kupplung verbunden werden können. Hierzu ist in jedem der Netzwerke ein Netzwerkgerät 511 vorhanden, das als Signaltransformationsgerät zwischen dem Ethernet-Netzwerk im jeweiligen Wagen und demjenigen Teil der UIC-Leitungen ausgestaltet ist, welche die Einzelsignale führen (Leitungen 1...16 im UIC-Standard). Ein zweites Netzwerkgerät 512 dient als Signaltransformationsgerät zwischen dem Ethernet-Netzwerk und demjenigen Teil der UIC-Leitungen, welche den Zugbus (Traktionsbus) führen (redundantes Leitungspaar 17 und 18 im UIC-Standard). UIC-Leitungen für Einzelsignale und Zugbus sind hier als gemeinsames Bussystem 503 dargestellt (Darstellung gemäss UIC-Kodexen 556, 558 und 568), das zwischen den Wagen auf bekannte Weise über Leitungen 502, 502' geführt ist. Verteiler 501, 501' stellen die Verteilung der Signale vom Bussystem 503 zu den Netzwerkgeräten 511, 512, 511' und 512' sicher. Über die Netzwerkgeräte 511, 512, 511' und 512' kann so jedes der Netzwerke via den UIC-Bus und/oder den Zugbus mit anderen Netzwerken im Zug Daten austauschen. Dieser Datenaustausch ist naturgemäss langsam, stellt aber keine prinzipiellen Probleme dar. Redundanz wird einerseits dadurch geschaffen, dass das Leitungspaar des Zugbusses nach UIC-Standard doppelt (redundant) geführt ist. Andererseits entsteht Redundanz dadurch, dass die Signalleitungen des UIC-Busses doppelt über die Kupplung hinweggeführt sind. Die Topologie der Netzwerke für diesen Fall ist in der Fig. 10B illustriert. Ringförmige Ethernet-Netzwerke 300a, 300b sind über den (langsameren) UIC-Bus 101 bzw. Zugbus 103 verbunden.

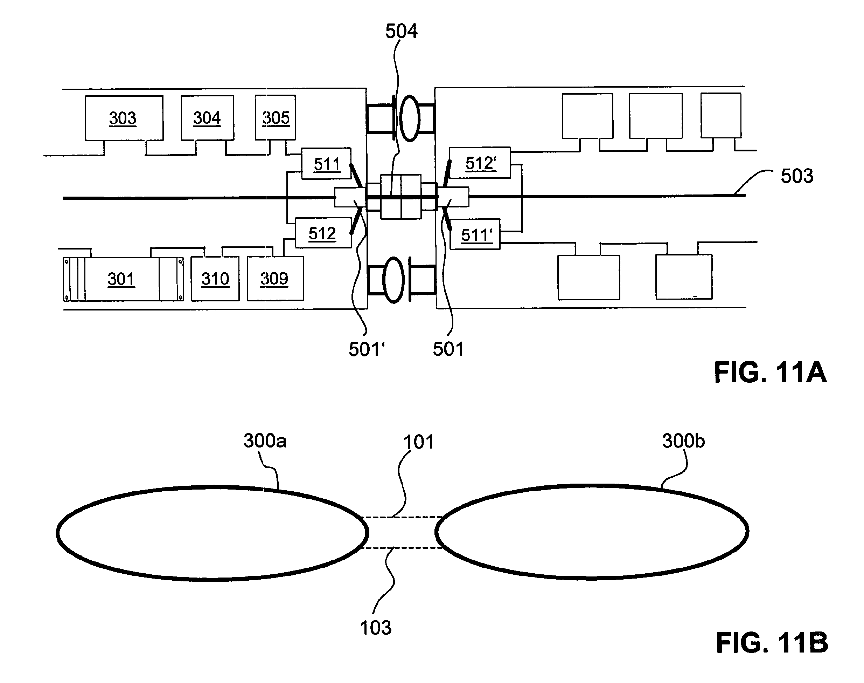

Dieselbe Topologie resultiert, wenn eine automatische gleisfeldtrennbare Kupplung verwendet wird, wie dies in den Figuren 11A und 11B illustriert ist. Wiederum erfolgt die Kommunikation über eine Kupplung 504 hinweg durch den UIC-Bus und/oder Zugbus.

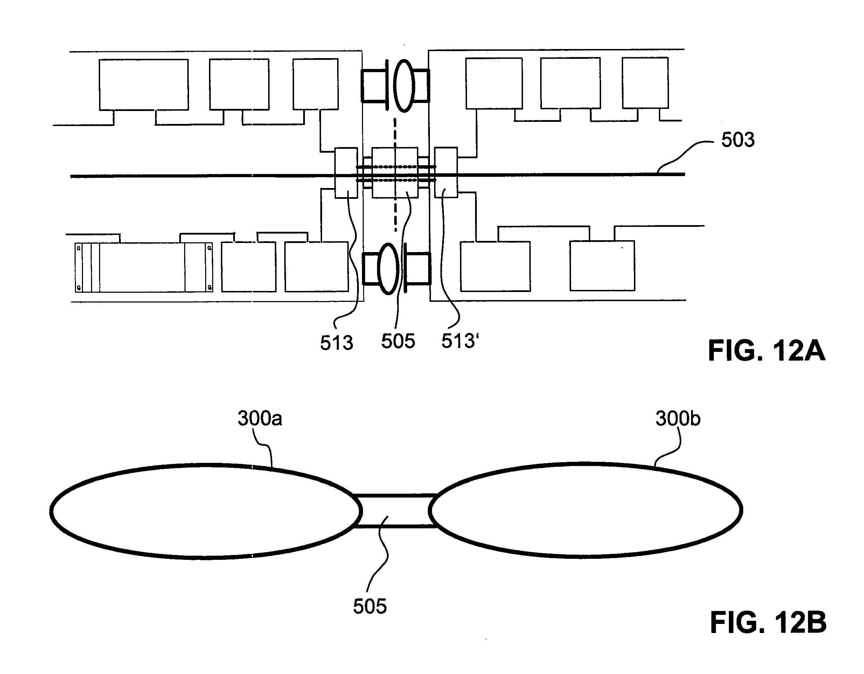

Es ist aber auch denkbar, eine Ethernet-Verbindung zwischen (angrenzenden) Fahrzeugen zu realisieren. Dies ist in den Fig. 12A und 12B illustriert. Ethernet-Switches 513, 513' sind in jedem der Netzwerke vorhanden. Diese sind über zwei Ethernetleitungen durch die Kupplung 505 hindurch verbunden. Die Switches 513, 513' stellen fest, ob ein Datenpaket für ein Netzwerkgerät in einem anderen Wagen bestimmt ist, und leiten es gegebenenfalls entsprechend über die Kupplung hinweg weiter. Die resultierende Topologie ist in der Fig. 12B illustriert. Ringförmige Netzwerke 300a, 300b sind über eine oder zwei EthernetLeitungen in der Kupplung 505 verbunden, die wiederum konzeptionell zu einem Ring geschlossen sind. Eine doppelte Führung der Verbindung zwischen den Ringen ermöglicht wiederum eine zusätzliche Redundanz.

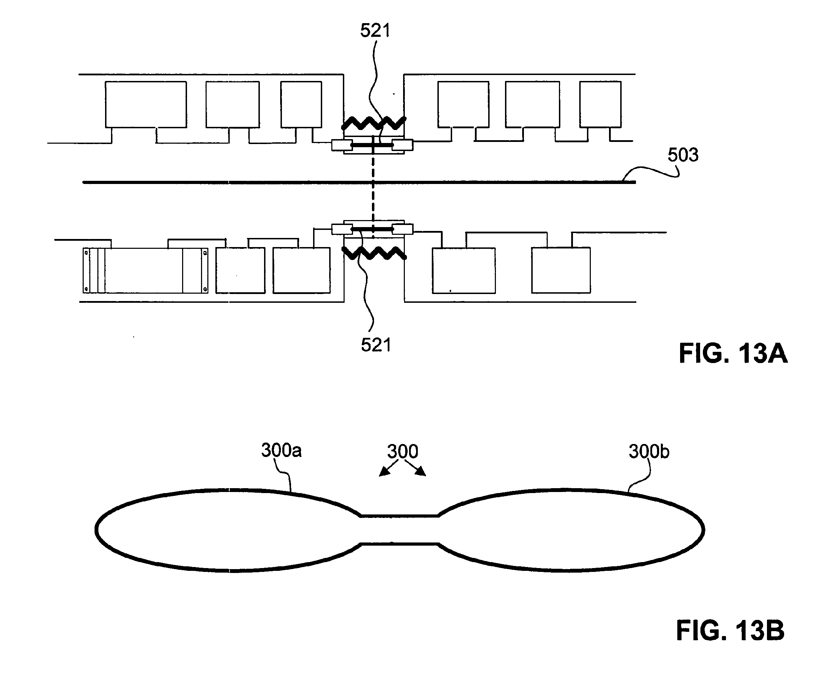

Bei nur depottrennbaren, nicht gleisfeldtrennbaren Kupplungen wird es schliesslich möglich, dass sich ein einziges ringförmiges PIS-Netzwerk 300 mit Teilnetzen 300a, 300b durch Verbindungskabel 521 über die Kupplung hinweg erstreckt, wie in den Fig. 13A und 13B dargestellt.

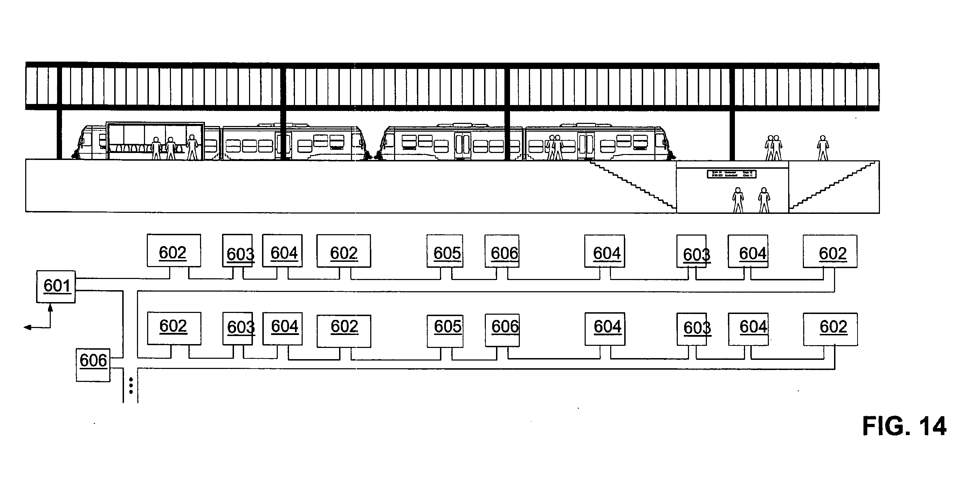

Die vorliegende Erfindung lässt sich vorteilhaft auch in einem Kundeninformationssystem verwenden, wie es beispielhaft in der Fig. 14 für ein Kundeninformationssystem an einem Haltepunkt illustriert ist. Eine Zentrale 601 steuert die Netzwerkgeräte 602 bis 606, die wiederum in einem Ring angeordnet sind und jeweils eine Datenübertragungseinheit aufweisen, wie sie oben beschrieben wurde. Beispiele für Netzwerkgeräte sind ein Bildschirm 602 zur Ausgabe von Fahrplaninformationen, ein Audio-Hub 603, ein Zeilenanzeiger 604 zur Anzeige von Zuginformationen am Bahnsteig, ein Kamera-Hub 605 zum Anschluss von Überwachungskameras, oder eine Sprechstelle 606 eines Intercom-Systems.

Aus der vorstehenden Beschreibung wird klar, dass eine Vielzahl von Variationen möglich sind, ohne den Bereich der Erfindung zu verlassen. So kann statt eines Relais z.B. ein Halbleiterelement verwendet werden, das im passiven Zustand die Verbindung zwischen den Netzwerkanschlüssen schliesst und sie im aktiven Zustand öffnet. Als Anschlüsse können alle Arten von Anschlüssen verwendet werden, die genügend robust für einen Einsatz in Fahrzeugen sind. Die vorstehende Beschreibung bezog sich auf ein Ethernet-Netzwerk nach IEEE 802. Stattdessen kann das Ethemet-Protokoll auch modifiziert sein, oder es kann ein anderer Standard eines Hochgeschwindigkeitsnetzes verwendet werden.

### Bezugszeichenliste

- 101: UIC-Bus
- 102: Intercom-Bus
- 103: Zugbus (MVB/WTB, CAN etc.)
- 104: Kupplungselement
- 111, 111': Triebwageneinheit, Fahrzeug
- 112: traditioneller Wagen
- 200: Rechner
- 201: Kommunikationseinheit
- 202: zentrale Rechnereinheit
- 203: Audio-Ausgabeeinheit
- 204: Bildschirm-Ausgabeeinheit
- 205: Lautsprechersystem
- 206: Informationsbildschirm
- 207: Notsprechstelle
- 300: Fahrgastinformationssystem (PIS)
- 300a, 300b: Ringstruktur
- 301,301': Zentralrechner
- 302,302': UIC-Interface
- 303: Sprechstelle
- 304: Zeilenanzeige
- 305: Reservationsanzeige
- 306: Fahrzeugbegleiterpanel
- 307: Audio-Hub
- 308: Kamera-Hub
- 309: Bildschirm
- 310: Fahrerpanel (Fahrzeugführerpanel)
- 311, 311': Switch
- 316: Sehne
- 312: Hub/Switch
- 313, 314, 315: Netzwerkgeräte
- 320: Notebook
- 400: Netzwerkgerät (PIS-Node)
- 401: Betriebssystem
- 402: Netzwerkcontroller
- 403: Software-"Schalter"
- 404, 404a, 404b: Netzwerkport
- 405a, 405b: Netzwerkkarte
- 406: Netzwerkswitch
- 407: Schaltelement
- 408a, 408b: Virtueller Netzwerkport
- 410: Datenübertragungseinheit
- 411: Rechnereinheit
- 501, 501': UIC-Verteiler
- 502, 502': UIC-Kabel
- 503: UIC-Bus (mit Leitungen 1...16 und redundantem Leitungspaar 17/18)
- 504: Kupplung (UIC/Zugbus)
- 505: Kupplung (Ethernet)
- 511,511': UIC-Signaltransformationsgerät
- 512, 512': Zugbus-Signaltransformationsgerät
- 513, 513': Ethernet-Switches
- 521: Ethernet-Verbindungskabel
- 601: Zentrale
- **602**: Grafik-/Videobildschirm
- 603: Audio-Hub
- 604: Zeilenanzeiger
- 605: Kamera-Hub
- 606: Sprechstelle

## Patentansprüche

1. Datenübertragungseinheit (410) für ein Datenkommunikationsnetzwerk, insbesondere für ein Fahrgastinformationssystem in einem Verkehrsmittel oder ein Kundeninformationssystem, wobei die Datenübertragungseinheit (410) mindestens einen ersten und einen zweiten Netzwerkanschluss (409a, 409b) für jeweils eine Datenübertragungsleitung sowie Mittel zur Übertragung von Daten zwischen den Netzwerkanschlüssen und einer Rechnereinheit (411) aufweist, wobei die Datenübertragungseinheit (410) ein Schaltelement (407) umfasst, das derart konfiguriert ist, dass es eine direkte Verbindung zwischen dem ersten und dem zweiten Netzwerkanschluss (409a, 409b) herstellt, wenn ein vorbestimmter Fehlerzustand eintritt, und wobei der vorbestimmte Fehlerzustand mindestens einen der folgenden Zustände umfasst:
- an der Datenübertragungseinheit (410) ist keine Rechnereinheit (411) angeschlossen; und/oder
- eine an der Datenübertragungseinheit (410) angeschlossene Rechnereinheit (411) ist nicht betriebsbereit; und/oder
- die Datenübertragungseinheit (410) ist nicht betriebsbereit.

2. Datenübertragungseinheit (410) nach Anspruch 1, wobei der erste und der zweite Netzwerkanschluss (409a, 409b) jeweils für den Anschluss an ein Netzwerk nach dem Ethernet-Standard ausgebildet sind.

3. Datenübertragungseinheit nach Anspruch 1 oder 2, wobei das Schaltelement (407) durch eine von der Rechnereinheit (411) abgegebene Steuerspannung betätigbar ist und derart ausgebildet ist, dass es eine Verbindung zwischen dem ersten und dem zweiten Netzwerkanschluss (409a, 409b) herstellt, wenn die Steuerspannung einen vorbestimmten Wert unterschreitet.

4. Datenübertragungseinheit nach einem der Ansprüche 1 bis 3, wobei das Schaltelement (407) ein mechanisch oder elektromagnetisch betätigbares Schaltelement ist.

5. Verwendung einer Datenübertragungseinheit nach einem der vorhergehenden Ansprüche in einem Verkehrsmittel oder an einem Haltepunkt eines Verkehrsmittels.

6. Verwendung nach Anspruch 5, wobei die Datenübertragungseinheit Teil eines Fahrgast-/Kundeninformationssystems (300) ist.

7. Netzwerkgerät (400) mit einer Datenübertragungseinheit (410) nach einem der Ansprüche 1 bis 4, wobei das Netzwerkgerät als eines der folgenden Geräte konfiguriert ist:
- als Steuergerät (301) zur Steuerung des Netzwerks und/oder anderer Netzwerkgeräte;
- als Signaltransformationsgerät (302) zur Datenkommunikation zwischen dem Datenkommunikationsnetzwerk und einem weiteren Netzwerk, insbesondere einem Netzwerk nach einem UIC-Kodex oder einem IEC- oder LBT-Standard;
- als Sprachkommunikationsgerät (303) zur Eingabe und/oder Ausgabe von Sprachsignalen;
- als Tonausgabegerät (307) zur Ausgabe von Audiosignalen;
- als Informationsanzeigegerät (304; 305; 309) zur optischen Anzeige von über das Netzwerk übertragenen Informationen, insbesondere als Reservationsanzeigegerät zur Anzeige von Sitzplatzreservationen oder als Display zur Anzeige von Reiseinformationen oder Unterhaltungsinhalten;
- als Bildübertragungsgerät für Photo- und/oder Videodaten (308).

8. Datenkommunikationsnetzwerk für ein Verkehrsmittel, insbesondere für ein schienengebundenes Verkehrsmittel, umfassend eine Mehrzahl von Datenübertragungseinheiten (410) nach einem der Ansprüche 1 bis 4 sowie eine Mehrzahl von Datenübertragungsleitungen, wobei die Datenübertragungseinheiten (410) derart über die Datenübertragungsleitungen verbunden sind, dass der erste Netzwerkanschluss der jeweils nachfolgenden Datenübertragungseinheit mit dem zweiten Netzwerkanschluss der jeweils vorhergehenden Datenübertragungseinheit verbunden ist.

9. Datenkommunikationsnetzwerk nach Anspruch 8, welches mindestens ein Netzwerkgerät umfasst, das als Signaltransformationsgerät (302) zur Datenübertragung zwischen dem Datenkommunikationsnetzwerk und einem Datenübertragungssystem mit einem unterschiedlichen Kommunikationsprotokoll ausgebildet ist.

10. Datenkommunikationsnetzwerk nach Anspruch 8, welches mindestens ein Netzwerkgerät umfasst, das als Signaltransformationsgerät (302) zur Datenübertragung zwischen dem Datenkommunikationsnetzwerk und einem Datenübertragungssystem mit dem gleichen Kommunikationsprotokoll, aber einer anderen Bandbreite als das Datenkommunikationsnetzwerk ausgebildet ist.

11. Datenkommunikationsnetzwerk nach einem der Ansprüche 8 bis 10, wobei die Datenübertragungseinheiten (410) derart miteinander verbunden sind, dass sie eine geschlossene Ringstruktur bilden.

12. Datenkommunikationsnetzwerk nach Anspruch 11, welches mindestens ein Netzwerkgerät umfasst, das als Steuereinheit (301) zur Steuerung des Netzwerks konfiguriert ist, **dadurch gekennzeichnet, dass** die Steuereinheit (301) dazu ausgebildet ist, eine Netzwerkverbindung in der Ringstruktur abhängig von Eigenschaften des Netzwerks logisch oder physikalisch zu öffnen oder zu schliessen.

13. Datenkommunikationsnetzwerk nach Anspruch 11 oder 12, wobei das Datenkommunikationsnetzwerk mindestens eine in der Ringstruktur befindliche Datenübertragungseinheit umfasst, die Teil eines als Verteilgerät (311; 312) konfigurierten Netzwerkgeräts ist, wobei das Verteilgerät (311; 312) mit ausserhalb der Ringstruktur befindlichen Netzwerkgeräten, mit einer weiteren Ringstruktur oder mit einem zweiten im Ring befindlichen Verteilgerät (311; 312) verbunden ist.

14. Datenkommunikationsnetzwerk nach einem der Ansprüche 8 bis 13, wobei die Datenübertragungseinheiten und Datenübertragungsleitungen zusätzlich zur Übertragung einer Versorgungsenergie an die Datenübertragungseinheiten ausgebildet sind.

15. Verkehrsmittel mit einem Datenkommunikationsnetzwerk nach einem der Ansprüche 8 bis 14.

16. Verkehrsmittel nach Anspruch 15, wobei das Verkehrsmittel ein Verkehrsmittel mit mindestens zwei voneinander trennbaren Rollmaterialeinheiten ist, **dadurch gekennzeichnet, dass** jede Rollmaterialeinheit ein Datenkommunikationsnetzwerk nach einem der Ansprüche 8 bis 13 umfasst und dass diese Datenkommunikationsnetzwerke zwischen den Rollmaterialeinheiten über ein Datenübertragungssystem mit einem unterschiedlichen Kommunikationsprotokoll verbunden sind.

17. Verkehrsmittel nach Anspruch 15, wobei das Verkehrsmittel ein Verkehrsmittel mit mindestens zwei voneinander trennbaren Rollmaterialeinheiten ist, **dadurch gekennzeichnet, dass** sich das Datenkommunikationsnetzwerk über eine Schnittstelle zwischen den Rollmaterialeinheiten hinweg erstreckt.
